# EUROPÄISCHE PATENTANMELDUNG

(11) **EP 0 779 463 A2**
(43) Veröffentlichungstag der Anmeldung: **18.06.1997**
(21) Anmeldenummer: 96119843.9
(22) Anmeldetag: 11.12.1996
(51) Int. Cl.: F16L 33/04, F16L 21/00

(54) **Rohrspannmuffe**

(30) Priorität: 12.12.1995 CH 3545/95
(71) Anmelder: Mage AG, 1791 Courtaman (CH)
(72) Erfinder: Sponer, Wolfgang, 1230 Wien (AT)
(74) Vertreter: KOHLER SCHMID + PARTNER

(57) **Zusammenfassung**

Eine Rohrspannmuffe (10) zum Verbinden zweier Rohre mit glatten Enden weist einen Metallmantel (11) auf, der an einer umfänglich angeordneten Trennlinie des Metallmantels (11) mit Spannwinkeln (15,16) ausgebildet ist. Die Spannwinkel (15,16) sind durch Verstärkungswinkel (17,18) unterlegt. Eine Stanz-Nietmutter (20) bzw. ein Stanz-Nietring (19) halten den Spannwinkel (15,16) und den Verstärkungswinkel (17,18) zusammen, indem der Spannwinkel (15,16) und der Verstärkungswinkel (17), (18) mit der Stanz-Nietmutter (20) bzw. dem Stanz-Nietring (19) vernietet sind. Über die vernietete Halterung der Stanz-Nietmutter (20) bzw. des Stanz-Nietrings (19) kann die Rohrspannmuffe (10) vereinfacht gefertigt werden.

## Beschreibung

Die Erfindung geht aus von einer Rohrspannmuffe zum Verbinden zweier Rohre mit glatten Enden, bestehend aus einem Metallmantel und einer Elastomerdichtung.

Die Elastomerdichtung ist in den Metallmantel eingelegt, und der Metallmantel kann flach oder profiliert ausgebildet sein. Der Metallmantel ist quer zur Umfangsrichtung mindestens einmal geteilt (Trennlinie), und er wird dort mit Hilfe einer oder mehrerer Spannschrauben so zusammengezogen, daß die Elastomerdichtung fest gegen die zu verbindenden Rohre gepreßt wird, um die zu verbindenden Rohre fluiddicht zusammenzufügen.

Aufgabe der Erfindung ist es, bekannte Rohrspannmuffen dahingehend zu verbessern, daß die Distanzringe und Schraubenmuttern, die die Spannschrauben halten, vereinfacht und dennoch verbessert an der Rohrspannmuffe angebracht werden können.

Erfindungsgemäß wird diese Aufgabe dadurch gelöst, daß an einer oder mehreren umfänglich angeordneten Trennlinien des Metallmantels Spannwinkel radial nach außen angebogen und auf die Spannwinkel Stanz-Nietmuttern bzw. Stanz-Nietringe aufgesetzt sind.

Die erfindungsgemäße Ausgestaltung der Rohrspannmuffe hat den wesentlichen Vorteil, daß durch den Einsatz von Stanz-Nietmuttern bzw. Stanz-Nietringen eine besonders rationelle Fertigung der Rohrspannmuffe möglich ist. Die Stanz-Nietmuttern bzw. Stanz-Nietringe können ohne vorbereitende Arbeiten auf die Spannwinkel aufgepreßt werden. Dabei durchstößt sowohl die Stanz-Nietmutter wie auch der Stanz-Nietring die Materialstärke des Spannwinkels und die Stanz-Nietmutter bzw. der Stanz-Nietring werden mit dem jeweiligen Spannwinkel vernietet. Ein Vorstanzen von Löchern an den Spannwinkeln entfällt. Durch die axial lange, hohe Bauform der Stanz-Nietmuttern bzw. der Stanz-Nietringe wird eine gute Führung der Spannschrauben erzielt, wodurch die Spannwinkel weitgehend von Biegekräften frei bleiben.

In weiterer Ausgestaltung der Erfindung sind die Spannwinkel durch einen oder mehrere Verstärkungswinkel gegen Biegung gesichert. Dies hat den Vorteil, daß unerwünschten Verformungen an der Rohrspannmuffe, hervorgerufen durch erhöhte Zug- bzw. Druckkräfte, im Bereich der Spannwinkel, entgegengewirkt werden kann. Werden die Verstärkungswinkel über oder unter den Spannwinkel gelegt, so sind die Spannwinkel zuverlässig gegen eine unerwünschte Verformung gesichert. Es versteht sich, daß auch der Spannwinkel nicht aus dem Metallmantel selbst gebogen sein muß. Die Spannwinkel können als vom Metallmantel getrennte Teile auf den Metallmantel selbst aufgesetzt bzw. mit einem Abschnitt am Innenumfang des Metallmantels befestigt sein. Die Spannwinkel bzw. die Spannwinkel und die Verstärkungswinkel tragen die Stanz-Nietmuttern bzw. die Stanz-Nietringe, die über Spannschrauben aufeinanderzu gezogen werden können. Der Verstärkungswinkel ist in einer Ausführungsform einstückig mit dem Metallmantel bzw. mit dem Spannwinkel verbunden.

In einer weiteren Ausführungsform werden die Spannwinkel und die Verstärkungswinkel über die Stanz-Nietmuttern bzw. die Stanz-Nietringe zusammengehalten.

In einer bevorzugten Ausführungsform ist zwischen der Trennlinie oder den Trennlinien eine Verbindungsbrücke vorgesehen, und die Verbindungsbrücke weist zwischen den Spannwinkeln schräg nach außen radial in Richtung Rohrachse verlaufende Randabschnitte auf, die über den Teil der Verbindungsbrücke, der beim Festziehen einer Spannschraube oder Spannschrauben unter einen Bördelrand des gegenüberliegenden Teils des Metallmantels gleitet, verlaufend in ihrer Höhe bis zu Null oder annähernd Null zurückgenommen sind.

Mit der Verbindungsbrücke wird die Distanz zwischen zwei radial nach außen gebogenen Spannwinkeln überbrückt und ein in den Metallmantel eingelegter Elastomerring wird nach außen abgedeckt, so daß die Elastomerdichtung beim Verspannen der Rohrspannmuffe nicht radial nach außen herausgepreßt werden kann. Sind die Randabschnitte an der Verbindungsbrücke nur über einen gewissen Abschnitt ausgebildet, so werden Materialdopplungen vermieden, und beim Verspannen der erfindungsgemäßen Rohrspannmuffe gleitet die Verbindungsbrücke mit ihren Randabschnitten bzw. mit ihren in der Höhe bis zu Null reduzierten Randabschnitten unter den gegenüberliegenden Teil des Metallmantels.

Die Verbindungsbrücke kann wie die Verstärkungswinkel oder die Spannwinkel über einen Endabschnitt mit dem Metallmantel verschweißt, verklebt, vernietet oder verklinkt sein. Eine Befestigung der Verbindungsbrücke am Metallmantel ist notwendig, damit die Verbindungsbrücke vorbestimmt auf die gegenüberliegende Seite des Metallmantels abgestimmt bzw. ausgerichtet ist.

Die Verbindungsbrücke weist über einen Teil ihrer Länge verlaufende Einschnitte auf. Dies hat den Vorteil, daß sie gegenüber dem Metallmantel eine erhöhte Flexibilität aufweist. Beim Verspannen der Rohrmuffe kann sich die Verbindungsbrücke unterschiedlichen Formgebungen anpassen, indem sich die als Längsschlitze ausgebildeten Einschnitte verbreitern bzw. verengen. Zusätzlich sind an der Verbindungsbrücke in Umfangsrichtung verlaufende Sicken vorgesehen. Die Sicken versteifen einzelne Abschnitte der Verbindungsbrücke.

In einer bevorzugten Weiterbildung der Erfindung sind die Stanz-Nietmuttern bzw. die Stanz-Nietringe in einer Größe ausgebildet, die geeignet ist, die Spannschrauben so zu führen, daß ein Nach-Vorne-Biegen der Spannwinkel verhindert wird. Über eine derartige Ausgestaltung der Stanz-Nietmuttern bzw. der Stanz-Nietringe wird eine zusätzliche Stabilisierung der erfindungsgemäßen Rohrspannmuffe im Bereich der Spannwinkel erreicht.

In einer weiteren Ausgestaltung der erfindungsgemäßen Rohrspannmuffe sind der Verstärkungswinkel und die Verbindungsbrücke mittels nur eines Schweißpunktes mit dem Umfang des Metallmantels verbunden. Dies hat den Vorteil, daß mittels eines Bearbeitungsschrittes sowohl der Verstärkungswinkel wie auch die Verbindungsbrücke am Metallmantel ausreichend stabil befestigt werden können.

Weitere Vorteile ergeben sich aus der Beschreibung der beigefügten Zeichnung. Ebenso können die vorstehend genannten und die noch weiter aufgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Die Erfindung ist in der Zeichnung dargestellt. Es zeigt:
- Fig. 1: eine erfindungsgemäße Rohrspannmuffe in einer Gesamtansicht;
- Fig. 2: einen vergrößerten Ausschnitt einer erfindungsgemäßen Rohrspannmuffe im Bereich einer Stanz-Nietmutter der Fig. 1;
- Fig. 3: eine erfindungsgemäße Rohrspannmuffe in Seitenansicht;
- Fig. 4: einen Querschnitt gemäß IV-IV der Fig. 3;
- Fig. 5 a: einen Verstärkungswinkel, der im Bererich eines Spannwinkels der erfindungsgemäßen Rohrspannmuffe angebracht werden kann;

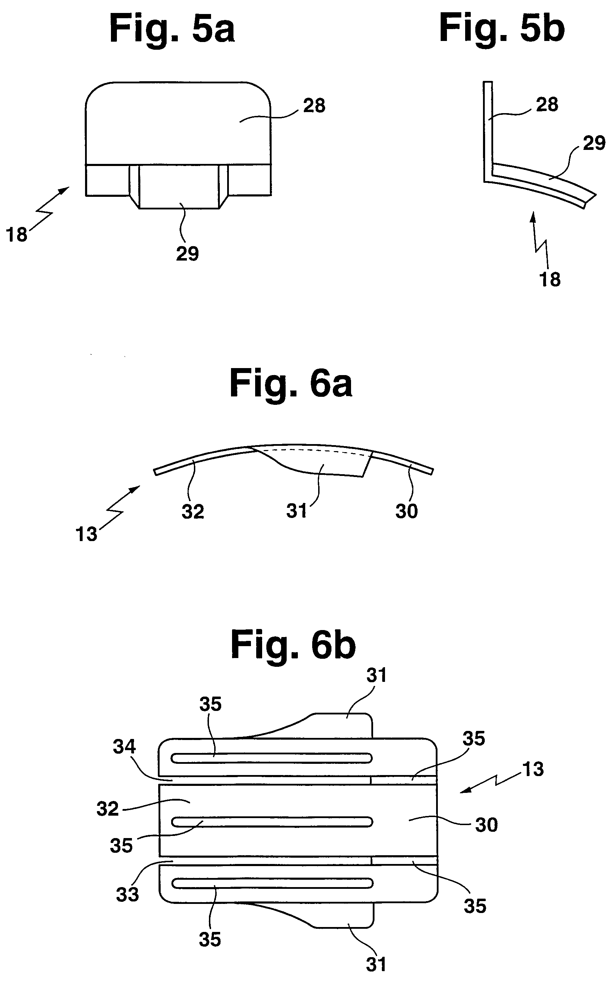

- Fig. 5 b: eine Seitenansicht des Verstärkungswinkels gemäß Fig. 5 a;
- Fig. 6 a: eine Verbindungsbrücke einer erfindungsgemäßen Rohrspannmuffe;
- Fig. 6 b: eine Draufsicht auf eine Verbindungsbrücke gemäß Fig. 6 a.

Die einzelnen Figuren der Zeichnung zeigen den erfindungsgemäßen Gegenstand teilweise stark schematisiert und sind nicht maßstäblich zu verstehen. Die einzelnen Gegenstände der Figuren sind teilweise vergrößert bzw. verkleinert, damit der erfindungsgemäße Aufbau der zu beschreibenden Rohrspannmuffe bestmöglich gezeigt werden kann.

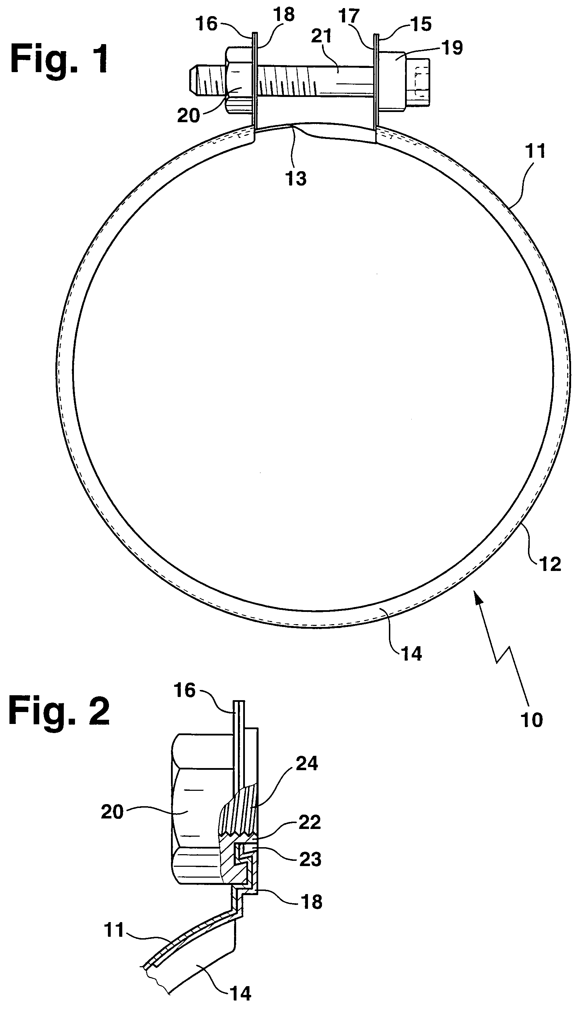

Fig. 1 zeigt mit 10 eine Rohrspannmuffe zum Verbinden zweier Rohre mit glatten Enden. Die Rohrspannmuffe 10 besteht aus einem profilierten oder unprofilierten Metallmantel 11, welcher quer zur Umfangsrichtung an mindestens einer Stelle des Umfangs getrennt ist.

Eine in der Fig. 1 dargestellt Profilierung 12 ist mit gestrichelten Linien am Umfang der Rohrspannmuffe 10 eingezeichnet. Der Metallmantel 11 ist im aufgetrennten Bereich mit einer Verbindungsbrücke 13 ausgebildet, die an einem Ende des Metallmantels 11 beispielsweise über einen Schweißpunkt befestigt ist.

Der Metallmantel 11 weist beidseits umfänglich in Richtung Rohrachse vertikal oder schräg nach außen verlaufende Bördelränder 14 auf, die ein Zerquetschen bzw. Herausquellen einer Gummidichtung zwischen Metallmantel 11 und Rohraußenoberfläche verhindern. Weitere umfänglich umlaufende Tief- oder Hochsicken können am Metallmantel 11 zur Erhöhung der Rohrstrangsteifigkeit noch zusätzlich ausgebildet sein.

An der Rohrspannmuffe 10 sind im geteilten Bereich Spannwinkel 15, 16 an den Metallmantel 11 angebogen. Die Spannwinkel 15, 16 sind durch Verstärkungswinkel 17, 18 gestützt, die über einen Stanz-Nietring 19 bzw. eine Stanz-Nietmutter 20 mit den Spannwinkeln 15, 16 verbunden sind.

Der Stanz-Nietring 19 und die Stanz-Nietmutter 20 nehmen eine Spannschraube 21 auf, mittels derer die Rohrspannmuffe 10 verspannt werden kann. Im Stanz-Nietring 19 ist die Spannschraube 21 geführt, und in der Stanz-Nietmutter 20 ist ein Gewinde ausgebildet, in das die Spannschraube 21 eingedreht werden kann.

Fig. 2 zeigt in vergrößerter Darstellung und teilweise im Schnitt die Rohrspannmuffe aus Fig. 1 im Bereich der Stanz-Nietmutter 20. Der Spannwinkel 16 ist aus dem Metallmantel 11 einstückig herausgebogen, und der Spannwinkel 16 ist durch einen Verstärkungswinkel 18 unterlegt. Mit einem Ende greift der Verstärkungswinkel 18 unter den Metallmantel 11. Dieser Abschnitt des Verstärkungswinkels 18 ist durch den Bördelrand 14 beidseits begrenzt.

Die Stanz-Nietmutter 20 bzw. der Stanz-Nietring 19 aus Fig. 1 werden derart mit dem Spannwinkel 16 bzw. mit dem Verstärkungswinkel 18 verbunden, daß man eine Stanz-Nietmutter 20 gegen den Spannwinkel 16 preßt. Eine in der Figur nicht gezeigte Gegenauflagefläche stützt dabei den Verstärkungswinkel 18 und den Spannwinkel 16 ab. Die Stanz-Nietmutter 20 wird mit einer derartigen Kraft gegen den Spannwinkel 16 gepreßt, daß mit einem Ansatz 22 der Stanz-Nietmutter 20 der Spannwinkel 16 und der Verstärkungswinkel 18 durchstoßen werden. In der Stanz-Nietmutter 20 ist auf einer Seite eine Nut 23 ausgebildet, die im Querschnitt schwalbenschwanzartig ausgebildet ist, und in die über die Gegenanlagefläche, beispielsweise eine Matritze, das Material des Spannwinkels 16 und des Verstärkungswinkels 18 in diesem Bereich in diese Nut 23 eingepreßt wird. Die Stanz-Nietmutter bzw. der Stanz-Nietring werden in einem Arbeitsgang mit dem Spannwinkel und dem Verstärkungswinkel vernietet. Ein Gewinde 24 der Stanz-Nietmutter 20 kann den Gewindeabschnitt einer Spannschraube aufnehmen.

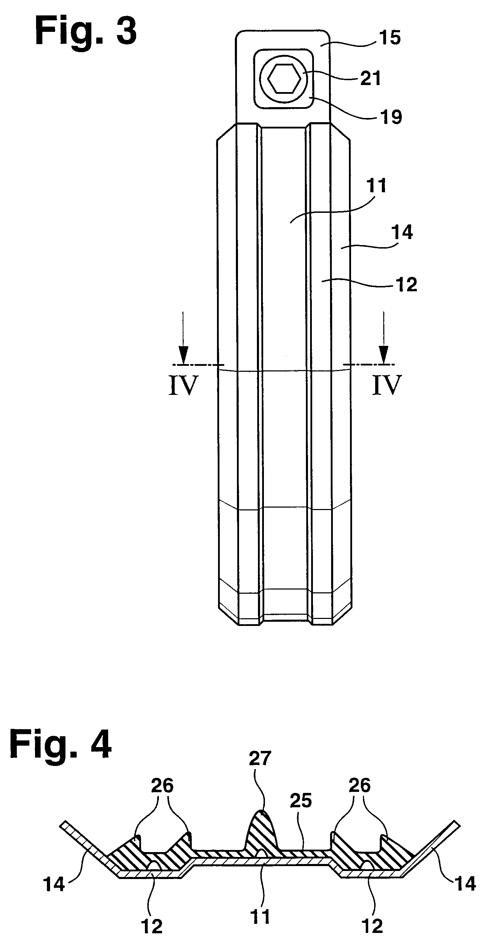

Fig. 3 zeigt die Rohrspannmuffe der Fig. 1 in Seitenansicht. Der Metallmantel 11 ist mit der Profilierung 12 ausgebildet, die jeweils im Seitenbereich in einem angewinkelten Bördelrand 14 endet. Der Spannwinkel 15 trägt den Stanz-Nietring 19, und der Stanz-Nietring 19 nimmt die Stanz-Nietmutter 21 auf.

Fig. 4 zeigt die Rohrspannmuffe im Schnitt IV-IV der Fig. 3. Im Querschnitt ist am Metallmantel 11 die Profilierung 12 zu erkennen, die jeweils in dem Bördelrand 14 endet. In den Metallmantel 11 ist eine Elastomerdichtung 25 eingelegt, die aus Gummi bzw. aus einem gummielastischen Werkstoff gefertigt sein kann. Die Elastomerdichtung 25 weist Dichtungslippen 26 und eine Distanzlippe 27 auf. Die Dichtlippen 26 sind im Querschnitt halbkreisförmig bzw. dreieckförmig ausgebildet, und die Distanzlippe 27 verhindert eine Schallübertragung zwischen den Rohren, die durch die Rohrspannmuffe miteinander verbunden sind. Die Elastomerdichtung 25 ist in ihrer Außenkontur weitgehend an den Metallmantel 11 angepaßt.

Fig. 5 a zeigt einen Verstärkungswinkel 18 mit einer Verstärkungsfläche 28 und einem profilierten Abschnitt 29. Der profilierte Abschnitt 29 ist an die Profilierung des Metallmantels der erfindungsgemäßen Rohrspannmuffe angepaßt. In Fig. 5 b ist der Verstärkungswinkel 18 in Seitenansicht gezeigt. Der profilierte Abschnitt 29 wird mit dem Metallmantel verbunden, und die Verstärkungsfläche 28 liegt am Spannwinkel an.

Fig. 6 a zeigt eine Verbindungsbrücke 13, wie sie in Fig. 1 dargestellt ist. Mit einem Endabschnitt 30 ist die Verbindungsbrücke 13 mit dem Metallmantel der Rohrspannmuffe verbunden. Der Endabschnitt 30 geht in einen Randabschnitt 31 über, der sich im weiteren Verlauf derart verjüngt, daß er in einer Zunge 32 ausläuft, die die Materialstärke des Endabschnitts 30 aufweist. In Fig. 6 b ist die Verbindungsbrücke 13 in Draufsicht gezeigt. Die Verbindungsbrücke 13 weist Einschnitte 33, 34 auf, die über eine gewisse Länge der Verbindungsbrücke 13 ausgebildet sind. Zusätzlich sind Sicken 35 an der Verbindungsbrücke 13 vorgesehen, die sowohl als Hoch- bzw. Tiefsicken ausgebildet sein können. Über den Endabschnitt 30 ist die Verbindungsbrücke 13 mit der Rohrspannmuffe fest verbunden.

Eine Rohrspannmuffe 10 zum Verbinden zweier Rohre mit glatten Enden weist einen Metallmantel 11 auf, der an einer umfänglich angeordneten Trennlinie des Metallmantels 11 mit Spannwinkeln 15, 16 ausgebildet ist. Die Spannwinkel 15, 16 sind durch Verstärkungswinkel 17, 18 unterlegt. Eine Stanz-Nietmutter 20 bzw. ein Stanz-Nietring 19 halten den Spannwinkel 15, 16 und den Verstärkungswinkel 17, 18 zusammen, indem der Spannwinkel 15, 16 und der Verstärkungswinkel 17, 18 mit der Stanz-Nietmutter 20 bzw. dem Stanz-Nietring 19 vernietet sind. Über die vernietete Halterung der Stanz-Nietmutter 20 bzw. des Stanz-Nietrings 19 kann die Rohrspannmuffe 10 vereinfacht gefertigt werden.

## Patentansprüche

1. Rohrspannmuffe zum Verbinden zweier Rohre mit glatten Enden bestehend aus einem Metallmantel (11) und einer Elastomerdichtung (25), dadurch gekennzeichnet, daß an einer oder mehreren umfänglich angeordneten Trennlinien des Metallmantels (11) Spannwinkel (15, 16) radial nach außen angebogen und auf die Spannwinkel (15, 16) Stanz-Nietmuttern (20) bzw. Stanz-Nietringe (19) aufgesetzt sind.

2. Rohrspannmuffe nach Anspruch 1, dadurch gekennzeichnet, daß die Spannwinkel (15, 16) durch einen oder mehrere Verstärkungswinkel (17, 18) gegen Biegung gesichert sind.

3. Rohrspannmuffe nach Anspruch 2, dadurch gekennzeichnet, daß der Verstärkungswinkel (17, 18) einstückig mit dem Metallmantel (11) verbunden ist.

4. Rohrspannmuffe nach einem der Ansprüche 1 bis 3, dadurch gekennzeichnet, daß zwischen der Trennlinie oder den Trennlinien eine Verbindungsbrücke (13) vorgesehen ist und daß die Verbindungsbrücke (13) zwischen den Spanbnwinkeln (15, 16) schräg nach außen radial in Richtung Rohrachse verlaufende Randabschnitte (31) aufweist, die über den Teil der Verbindungsbrücke (13), der zum Festziehen einer Spannschraube oder Spannschrauben (21) unter einen Bördelrand (14) des gegenüberliegenden Teils des Metallmantels (11) gleitet, verlaufend in ihrer Höhe bis zu Null oder annähernd Null zurückgenommen sind.

5. Rohrspannmuffe nach einem der Ansprüche 1 bis 4, dadurch gekennzeichnet, daß die Stanz-Nietmutter (20) bzw. der Stanz-Nietring (19) Spannwinkel (15, 16) und Verstärkungswinkel (17, 18) miteinander verbindet.

6. Rohrspannmuffe nach einem der Ansprüche 1 bis 5, dadurch gekennzeichnet, daß der Verstärkungswinkel (17, 18) im Bereich eines am Umfang des Metallmantels (11) entlanglaufenden Endabschnitts (30) mit dem Metallmantel (11) verschweißt, verklebt, vernietet oder verklinkt ist.

7. Rohrspannmuffe nach einem der Ansprüche 4 bis 6, dadurch gekennzeichnet, daß die Verbindungsbrücke (13) über einen Teil ihrer Länge verlaufende Einschnitte (33, 34) aufweist.

8. Rohrspannmuffe nach einem der Ansprüche 4 bis 7, dadurch gekennzeichnet, daß die Verbindungsbrücke (13) in Umfangsrichtung verlaufende Sicken (35) aufweist.

9. Rohrspannmuffe nach einem der Ansprüche 1 bis 8, dadurch gekennzeichnet, daß die Stanz-Nietmuttern (20) bzw. die Stanz-Nietringe (19) eine Höhe aufweisen, welche geeignet ist, die Spannschrauben (21) so zu führen, daß ein Nach-Vorne-Biegen der Spannwinkel (15,16) verhindert wird.

10. Rohrspannmuffe nach einem der Ansprüche 4 bis 9, dadurch gekennzeichnet, daß der Verstärkungswinkel (17) und die Verbindungsbrücke (13) mittels nur eines Schweißpunktes mit dem Umfang des Metallmantels (11) verbunden sind.
